# EUROPEAN PATENT APPLICATION

(11) **EP 4 697 743 A1**
(43) Date of publication of application: **18.02.2026**
(21) Application number: 24934798.0
(22) Date of filing: 09.10.2024
(51) Int. Cl.: H04R 1/02

(54) **WEARABLE DEVICE**

(30) Priority: 11.04.2024 CN 202410436619
(71) Applicant: Shenzhen Shokzhear Co., Ltd., Shenzhen, Guangdong 518000 (CN)
(72) Inventor: ZHOU, Weihua, Shenzhen, Guangdong 518108 (CN); WANG, Yueqiang, Shenzhen, Guangdong 518108 (CN)
(74) Representative: Wang, Bo
(86) International application number: PCT/CN2024/123776
(87) International publication number: WO 2025/213733

(57) **Abstract**

A wearable device includes a housing assembly and a battery assembly, the housing assembly including an accommodating cavity and a battery window, the battery assembly including a battery bracket configured to mount a battery. A second pivot structure and a locking structure are formed between the battery bracket and an inner wall of the housing assembly. The battery bracket can rotate about the second pivot structure relative to the housing assembly to allow the battery bracket to enter and exit the accommodating cavity through the battery window. The locking structure can lock the battery bracket within the accommodating cavity in a state in which the battery bracket closes the battery window. By establishing a structural connection relationship between the battery bracket and the inner wall of the housing assembly by means of the second pivot structure and the locking structure, and by using the housing assembly as a structural mounting carrier for the battery assembly, a count of related connecting parts may be effectively reduced and the full utilization of the structure and space of the housing assembly may be realized, which is conducive to the miniaturization and lightweight design of the device. At the same time, by adjusting the battery bracket, it is convenient to replace the battery and maintain the integrity of the overall external structure of the device.

## Description

### CROSS-REFERENCE TO RELATED APPLICATIONS

The present disclosure claims priority to Chinese Application No. 202410436619.0, filed on April 11, 2024, the entire contents of which are hereby incorporated by reference.

### TECHNICAL FIELD

The present disclosure relates to the technical field of electronic devices, and in particular, to wearable devices

### BACKGROUND

Electronic devices have become indispensable tools in people's daily lives and work with continuous proliferation thereof, leading to increasingly high demands for performance of the electronic devices. In related technologies, the electronic devices such as in-ear or ear-hanging hearing aids, headphones, etc., comprise a main body that includes an external housing, an internal framework, and a variety of functional components. These functional components are assembled into a unified structure via the internal framework and then encapsulated by the external housing to form a complete electronic device. However, such structural designs often result in large size and heavy weight, which hinders the miniaturization and lightweight design of electronic devices.

### SUMMARY

The main technical problem solved by the present disclosure is to provide a wearable device capable of realizing lightweight and miniaturization.

One embodiment provides a wearable device. The wearable device may include a housing assembly and a battery assembly.

The housing assembly may include an accommodating cavity and a battery window, and the battery window may connect the accommodating cavity to an exterior of the housing assembly.

The battery assembly may include a battery bracket configured to mount a battery. A second pivot structure and a locking structure may be formed between the battery bracket and an inner wall of the housing assembly. The battery bracket may rotate about the second pivot structure relative to the housing assembly to allow the battery bracket to enter and exit the accommodating cavity through the battery window. The locking structure may lock the battery bracket within the accommodating cavity in a state in which the battery bracket closes the battery window.

In one embodiment, the battery bracket may have a peripheral wall portion and an end wall portion provided connected to each other. The peripheral wall portion may surround a geometric center of the end wall portion to form a battery compartment configured to mount the battery between the peripheral wall portion and the end wall portion. The second pivot structure and the locking structure may be arranged outside the battery compartment.

In one embodiment, the locking structure may include a locking protrusion and a locking slot, the locking protrusion may protrude out of the inner wall of the housing assembly, and the locking slot may be provided on the peripheral wall portion or the end wall portion. The locking protrusion and the locking slot may cooperate with each other to limit rotation of the battery bracket relative to the housing assembly.

In one embodiment, the peripheral wall portion may be provided with a third avoidance notch, the third avoidance notch may extend, in a width direction of the battery window, from an end of the peripheral wall portion away from the end wall portion to the end wall portion. The locking slot may be provided in the end wall portion and communicates with the third avoidance notch, and the width direction of the battery window may be a direction of a rotation axis of the second pivot structure.

In one embodiment, the third avoidance notch may be provided in the accommodating cavity in the state in which the battery bracket closes the battery window.

In one embodiment, the battery bracket may also include a limiting portion. The limiting portion may protrude out of an outer surface of the peripheral wall portion, and the limiting portion may be configured to abut against the housing assembly within the battery window, to cooperate with the locking structure to limit the battery bracket within the accommodating cavity.

In one embodiment, the battery bracket may also include an operating portion configured to receive an external force for prompting the battery bracket to rotate, and the operating portion protrudes out of an outer surface of the peripheral wall portion.

In one embodiment, the battery bracket may also include a fool-proof portion. The fool-proof portion may be provided within the battery compartment and protrude out of a junction between the peripheral wall portion and the end wall portion, and the fool-proof portion may be configured to limit a mounting direction of the battery within the battery compartment.

The battery compartment may be provided with a fool-proof mark, and the fool-proof mark may be fixed to an inner surface of the end wall portion or an inner surface of the peripheral wall portion.

In one embodiment, the battery bracket may further include an electrode window provided through the end wall portion. The electrode window may extend from the geometric center of the end wall portion to a junction between the end wall portion and the peripheral wall portion along a rotational trajectory of the battery bracket. The electrode window may be configured to allow an electrode elastic piece to extend into the battery compartment to abut against the battery.

In one embodiment, the peripheral wall portion may be provided with a fourth avoidance notch through the peripheral wall portion, and the fourth avoidance notch may be in communication with the electrode window.

In one embodiment, one end of the peripheral wall portion in a direction of a rotation axis of the second pivot structure may be connected to the end wall portion, to form an opening that communicates with the battery compartment on an end of the peripheral wall portion away from the end wall portion in the direction of the rotation axis of the second pivot structure. The opening may be configured to hold an electrode elastic piece against the battery.

In one embodiment, the second pivot structure may include a shaft sleeve portion and a shaft rod portion, the shaft sleeve portion protrudes out of an outer surface of the peripheral wall portion, and the shaft rod portion may be provided through the housing assembly and the shaft sleeve portion.

In one embodiment, the second pivot structure and the locking structure may be provided on two opposite sides in a length direction of the battery window in the state in which the battery bracket closes the battery window, and the length direction of the battery window may be a direction along the direction of the rotation axis of the second pivot structure.

In one embodiment, the battery assembly may further include the electrode elastic piece. The electrode elastic piece may be fixed within the accommodating cavity for elastically contacting the battery provided within the battery bracket.

In one embodiment, an electrode slot may be formed in the accommodating cavity, the electrode slot may include a first slot side wall and a second slot side wall, and the first slot side wall and the second slot side wall may be spaced apart from and opposite to each other in the direction of the rotation axis of the second pivot structure.

The electrode elastic piece may include a substrate portion, an elastic portion, and a contact portion. The elastic portion and the contact portion may be bent and connected to the substrate portion, respectively. The elastic portion and the substrate portion may be spaced apart from and opposite to each other in the direction of the rotation axis of the second pivot structure.

The elastic portion may abut against the first slot side wall, and the substrate portion may abut against the second slot side wall. The contact portion may protrude out of the electrode slot for elastically contacting the battery
In one embodiment, the electrode elastic piece may include a plurality of elastic portions, and at least two elastic portions among the plurality of elastic portions may be bent in different directions relative to the substrate portion, to limit and fix at least a portion of the electrode elastic piece within the electrode slot from different directions.

In one embodiment, the electrode slot may also include a slot bottom wall, and the slot bottom wall may be connected between the first slot side wall and one end of the second slot side wall in a second direction. The plurality of the elastic portions may include at least one first elastic portion, a free end of the first elastic portion may abut against the first slot side wall, and a fixed end of the first elastic portion may be bent and connected to an end of the substrate portion close to the slot bottom wall in the second direction. The second direction may be a direction intersecting with the direction of the rotation axis of the second pivot structure.

In one embodiment, a gap between the first elastic portion and the substrate portion may gradually increase from the fixed end of the first elastic portion toward the free end of the first elastic portion; and/or the first slot side wall may be provided with a second limiting protrusion, and the second limiting protrusion may be configured to abut against the free end of the first elastic portion from the second direction.

In one embodiment, a sealant may be provided between the first elastic portion and the first slot side wall and/or the slot bottom wall, and the sealant may be configured to fix the first elastic portion to the first slot side wall and/or the slot bottom wall.

In one embodiment, a second glue reservoir may be provided on the first slot side wall and/or a position of the slot bottom wall corresponding to the first elastic portion, and the second glue reservoir may be configured to accommodate the sealant.

In one embodiment, the plurality of the elastic portions may also include at least one second elastic portion and/or at least one third elastic portion, a fixed end of the at least one second elastic portion may be bent and connected to one end of the substrate portion in a first direction, and a fixed end of the at least one third elastic portion may be bent and connected to an end of the substrate portion away from the slot bottom wall in the second direction. Any two of the first direction, the second direction, and the direction of the rotation axis of the second pivot structure may intersect.

In one embodiment, the first elastic portion may be between the second elastic portion and the third elastic portion in the first direction.

In one embodiment, a third limiting protrusion may be provided on a position of the first slot side wall corresponding to the second elastic portion, and the third limiting protrusion may be configured to abut against the second elastic portion from the direction of the rotation axis of the second pivot structure.

In one embodiment, a fourth limiting protrusion may be provided in a position of the first slot side wall corresponding to the third elastic portion, and the fourth limiting protrusion may be configured to abut against the third elastic portion from the direction of the rotation axis of the second pivot structure.

In one embodiment, the electrode elastic piece may also be provided with a wiring portion, and the wiring portion may be connected to the substrate portion and protrude out of the electrode slot.

In one embodiment, in the direction of the rotation axis of the second pivot structure, the second slot side wall may be closer to the battery window as compared to the first slot side wall. The contact portion may be inclined relative to the substrate portion toward a side of the second slot side wall opposite to the first slot side wall and extends out of the electrode slot.

In one embodiment, there may be two electrode elastic pieces and two electrode slots, and the two electrode elastic pieces and the two electrode slots may be in one-to-one correspondence.

In the direction of the rotation axis of the second pivot structure, the two electrode slots may be located on two opposite sides of the battery window, to enable contact portions of the two electrode elastic pieces to be in elastic contact with a positive terminal and a negative terminal of the battery, respectively.

In one embodiment, one of the two electrode elastic pieces corresponding to the positive terminal of the battery may be a positive electrode elastic piece, and another of the two electrode elastic pieces corresponding to the negative terminal of the battery may be a negative electrode elastic piece.

An inclined angle of a contact portion of the positive electrode elastic piece relative to a substrate portion of the positive electrode elastic piece may be a first angle, an inclined angle of a contact portion of the negative electrode elastic piece relative to a substrate portion of the negative electrode elastic piece may be a second angle, and the first angle may be smaller than the second angle.

In one embodiment, the housing assembly may include a first housing and a second housing. The first housing may be connected to the second housing to enclose the accommodating cavity, the battery window may be provided through a side wall of the second housing away from the first housing, and the battery assembly may be connected to an inner wall of the second housing.

In one embodiment, one or more of the first housing, the second housing, and the battery bracket may be a one-piece structure made of polyimide (PI).

In one embodiment, the wearable device may further include an in-ear speaker, and the in-ear speaker may include a speaker assembly and a wearable assembly, and the wearable assembly may be connected between the housing assembly and the speaker assembly.

The housing assembly may be worn between a dorsal side of an ear of a user and the head of the user, and the speaker assembly may be inserted within an ear canal of the user.

In one embodiment, the wearable device may be an air-conduction hearing aid.

The wearable device, according to the above embodiments, includes a housing assembly and a battery assembly. The housing assembly includes an accommodating cavity and a battery window, and the battery assembly includes a battery bracket configured to mount a battery. A second pivot structure and a locking structure are formed between the battery bracket and an inner wall of the housing assembly, and the battery bracket is capable of rotating about the second pivot structure relative to the housing assembly to allow the battery bracket to enter and exit the accommodating cavity through the battery window. The locking structure is capable of locking the battery bracket within the accommodating cavity in a state in which the battery bracket closes the battery window. By establishing a structural connection relationship between the battery bracket and the inner wall of the housing assembly by means of the second pivot structure and the locking structure, and by using the housing assembly as a structural mounting carrier for the battery assembly, a count of related connecting parts may be effectively reduced and the full utilization of the structure and space of the housing assembly may be realized, which is conducive to the miniaturization and lightweight design of the device. At the same time, by adjusting the battery bracket, it is convenient to replace the battery and maintain the integrity of the overall external structure of the device.

### BRIEF DESCRIPTION OF THE DRAWINGS

FIG. 1 is a schematic diagram illustrating an exemplary wearable device according to an embodiment of the present disclosure;
FIG. 2 is a schematic diagram illustrating a cross-sectional structure (I) of a wearable device according to an embodiment of the present disclosure;
FIG. 3 is a schematic diagram illustrating a structural decomposition of a wearable device according to an embodiment of the present disclosure;
FIG. 4 shows a schematic diagram illustrating a cross-sectional structure (II) of a wearable device according to an embodiment of the present disclosure;
FIG. 5 is a schematic diagram illustrating a structural decomposition of a housing assembly of a wearable device according to an embodiment of the present disclosure;
FIG. 6 is a schematic diagram illustrating an exemplary second housing of a wearable device according to an embodiment of the present disclosure;
FIG. 7 is a schematic diagram illustrating an exemplary first housing of a wearable device according to an embodiment of the present disclosure;
FIG. 8 is a schematic diagram illustrating a structural relationship between a battery component and a housing assembly of a wearable device according to an embodiment of the present disclosure;
FIG. 9 is a schematic diagram illustrating a structural decomposition of a battery assembly of a wearable device according to an embodiment of the present disclosure;
FIG. 10 is a schematic diagram illustrating a localized structure (I) of a second housing of a wearable device according to an embodiment of the present disclosure;
FIG. 11 is a schematic diagram illustrating an exemplary battery bracket (I) of a wearable device according to an embodiment of the present disclosure;
FIG. 12 is a schematic diagram illustrating an exemplary battery bracket (II) of a wearable device according to an embodiment of the present disclosure;
FIG. 13 is a schematic diagram illustrating a localized structure (II) of a second housing of a wearable device according to an embodiment of the present disclosure; and
FIG. 14 is a schematic diagram illustrating a structural arrangement of an electrode elastic piece of a wearable device according to an embodiment of the present disclosure.

### Reference signs:

100, housing assembly; 100a, a holding cavity; 110, first housing; 110a, first housing wall; 110b, second housing wall; 110c, third housing wall; 110d, fourth housing wall; 110e, fifth housing wall; 110f, sound pickup hole; 110g, button window; 120, second housing; 120a, sixth housing wall; 120b, seventh housing wall; 120c, eighth housing wall; 120d, ninth housing wall; 120e, tenth housing wall; 120f, first connection port; 120g, second connection port; 120h, battery window; 131, support arm; 132, fixing pin; 141, first positioning protrusion; 142, first positioning groove; 187, locking protrusion; 188, shaft rod portion; 189, electrode slot; 190, second limiting protrusion; 191, second glue reservoir; 192, third limiting protrusion; 193, fourth limiting protrusion;
200, control board assembly; 300, microphone assembly; 400, button assembly; 500, first interface assembly; 600, second interface assembly; 700, battery assembly; 710, battery bracket; 711, peripheral wall portion; 712, end wall portion; 713, locking slot; 714, third avoidance notch; 715, limiting portion; 716, operating portion; 717, fool-proof portion; 718, electrode window; 719, fourth avoidance notch; 720, electrode elastic piece; 720a, positive elastic piece; 720b, negative elastic piece; 721, contact portion; 722, substrate portion; 723, elastic portion; 723a, first elastic portion; 723b, second elastic portion; 723c, third elastic portion; 724, wiring portion; 730, battery; 740, shaft sleeve portion; 810, speaker assembly; 820, wearable assembly.

### DETAILED DESCRIPTION

The present disclosure is described in further detail below by way of specific embodiments in conjunction with the accompanying drawings. Similar components in different embodiments adopt associated similar component labeling. In the following embodiments, many of the details are described to enable the present disclosure to be better understood. However, a person skilled in art may have no trouble recognizing that some of these features can be omitted in various embodiments or can be replaced by other components, materials, or methods. In some cases, some of the operations related to the present disclosure are not shown or described in the present disclosure, to avoid the core of the present disclosure from being overwhelmed by an excessive amount of description. To a person skilled in the art, the detailed description of these related operations is not necessary, and they can fully understand the related operations according to the description in the present disclosure and the general technical knowledge in the field.

In addition, the features, operations, or characteristics described in the present disclosure may be combined in any appropriate manner to form various embodiments. Meanwhile, various steps or actions in the description of the method may be switched or adjusted in order in a manner that would be apparent to a person skilled in the art. The various sequences in the present disclosure and the accompanying drawings are therefore only intended to clearly describe a particular embodiment, and do not purport to be a required sequence unless otherwise indicated that one of the sequences must be followed.

The serial numbers themselves, such as "first," "second", etc., are used herein for the purpose of distinguishing only the objects described and have no sequential or technical meaning. The terms "connection," and "coupling" in the present disclosure include direct and indirect connections (couplings) unless otherwise specified.

In the present disclosure, the in-ear hearing aid is mainly used as an example to describe the wearable device provided by the embodiments of the present disclosure. It is to be noted that the in-ear hearing aid is only a specific embodiment of the practical application of the wearable device, and the wearable device may also be other types of hearing aids, headphones, glasses, and other devices.

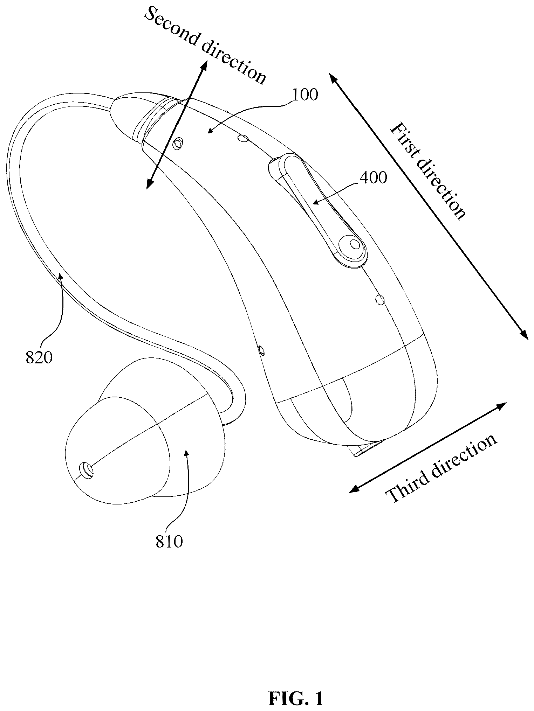

Referring to FIG. 1, the wearable device includes a housing assembly 100, a movement assembly, a speaker apparatus, and other functional components as needed.

The movement assembly may be understood as a collection of related components for realizing main functions of the wearable device. For example, the movement assembly is configured to acquire a sound signal, convert and process an electrical signal, switch on and off the wearable device, adjust a volume, supply power, etc. The movement assembly is provided in the housing assembly 100 to be built in combination with the housing assembly 100 to form a complete functional structural body. In order to facilitate differentiation and description, a combined structure of the housing assembly 100 and the movement assembly is defined as a main body of the wearable device.

The speaker apparatus may be understood as a collection of related components that realize a function of playing the sound signal of the wearable device. In some embodiments, the speaker apparatus is connected with the main body of the wearable device. For example, the speaker apparatus is connected to an exterior of the housing assembly 100.

Exemplarily, referring to FIG. 1, the speaker apparatus is an in-ear speaker including a speaker assembly 810 and a wearable assembly 820. The speaker assembly 810 is provided in the form of a structure that can be adaptably inserted into the ear canal of a user and mainly serves to play sound to the user. The wearable assembly 820 is connected between the speaker assembly 810 and the housing assembly 100 by electrically connecting the speaker assembly 810 and the movement assembly, and is mainly configured to establish a signaling connection relationship between the movement assembly and the speaker assembly 810.

The wearable assembly 820 may be made of a flexible cable with a signaling function, or the wearable assembly 820 may be made of other wires with both a signaling function and a shape memory function. One end of the wearable assembly 820 is fixed and electrically connected to the speaker assembly 810, and the other end of the wearable assembly 820 may be connected to the housing assembly 100 in a removable or non-removable manner and electrically connected to the movement assembly.

With the help of the wearable assembly 820, the main body of the wearable device may also be stably worn in the ear of the user, and the speaker assembly 810 may be inserted into the ear canal of the user. The main body of the wearable device (specifically, the movement assembly) may collect an external sound signal. By converting the sound signal into an electrical signal and outputting the electrical signal to the speaker assembly 810, the speaker assembly 810 may be used to play a corresponding sound signal, to realize the hearing aid function of the wearable device.

In some other embodiments, the speaker apparatus may also be configured in other forms in the wearable device (e.g., with reference to the movement assembly being directly provided in an interior or exterior of the housing assembly 100) to form a wearable device having different structural forms or different functions. In other words, by selectively configuring the speaker apparatus, the main body of the wearable device, and the structural relationship between the speaker apparatus and the main body, other structural forms of hearing aids or other types of wearable devices, such as headphones or eyeglasses, may also be constructed.

It is to be understood that when the wearable device is in an energized state, it is possible to realize the conversion between the sound signal (e.g., a mechanical vibration signal) and the electrical signal through the cooperation of the movement assembly and the speaker apparatus to facilitate the user to hear the sound through the ear. Generally speaking, the mechanical vibration is air conduction-based and acts on a tympanic membrane of the user mainly through the air as a medium, and then acts on an auditory nerve. The mechanical vibration is also bone conduction-based and acts directly on the auditory nerve through the user's bones and tissues as a medium. For the sound heard by the user, the former may be referred to as an air-conducted sound, and the latter may be abbreviated as a bone-conducted sound.

Based on this, by selecting and configuring the specific functional structures of the movement assembly and the speaker apparatus, the wearable device may form both the air-conducted sound and the bone-conducted sound, and may also realize both the air-conducted sound and the bone-conducted sound.

For more clear and detailed description of the structural configuration of the main body of the wearable device, based on an outer contour form of the main body of the wearable device, three directions (e.g., a first direction, a second direction, and a third direction) intersecting or perpendicular to each other are defined herein.

Exemplarily, when the wearable device is in a naturally placed state, the first direction refers to a length direction of the whole wearable device, the second direction refers to a thickness direction of the whole wearable device, and the third direction refers to a width direction of the whole wearable device.

Exemplarily, in a state in which the wearable device is normally worn between a dorsal side of the ear and the head, with the user as a reference frame, the first direction refers to an up-down direction of the user, the second direction refers to a front-back direction of the user, and the third direction refers to a left-right direction of the user.

In one embodiment, referring to FIGs. 1 to 7, the housing assembly 100 includes a first housing 110 and a second housing 120. The first housing 110 and the second housing 120 are opposite to each other and cooperatively connected to each other to form a holding cavity 100a in the interior of the housing assembly 100 (or between the first housing 110 and the second housing 120). The movement assembly is arranged within the holding cavity 100a. At least a portion of the movement assembly 100 is connected to the first housing 110, and at least another portion of the movement assembly 100 is connected to the second housing 120.

Exemplarily, the movement assembly includes a control board assembly 200, a microphone assembly 300, a button assembly 400, a first interface assembly 500, a second interface assembly 600, and a battery assembly 700. For ease of distinguishing and describing, the movement assembly in which the functional member connected to the first housing 110 is defined as a first assembly, and the functional member connected to the second housing 120 in the movement assembly is defined as a second assembly. The first assembly may include the control board assembly 200, the microphone assembly 300, and the button assembly 400. The second assembly may include the first interface assembly 500, the second interface assembly 600, and the battery assembly 700.

The microphone assembly 300 is electrically connected to the control board assembly 200 and fixed to the first housing 110, respectively. The microphone assembly 300 is mainly configured to collect the sound signal outside the wearable device (specifically outside the housing assembly 100). For example, the mechanical vibration of the relevant parts of the microphone assembly 300 is triggered due to a sound of an external environment, thus enabling the microphone assembly 300 to realize the acquisition of the sound signal.

The control board assembly 200 mainly plays a role in regulating and managing the wearable device. For example, the control board assembly 200 may receive the sound signal collected by the microphone assembly 300, and then convert the sound signal into electrical signal to be output to the speaker apparatus (specifically, the speaker assembly 810), to play the sound signal to the user with the aid of the speaker apparatus.

The button assembly 400 is movably connected to the first housing 110 and cooperatively arranged with the control board assembly 200. Through the cooperation between the button assembly 400 and the control board assembly 200, input of a preset command may be realized. For example, through the button assembly 400, a command for controlling the wearable device to turn on and off, a command for volume adjustment, or other commands to the control board assembly 200 may be input.

The first interface assembly 500, the second interface assembly 600, and the battery assembly 700 are connected to the second housing 120 and electrically connected to the control board assembly 200 (e.g., in an electrical signal connection relationship with the control board assembly 200 via a wire assembly). The first interface assembly 500 primarily serves to connect the speaker apparatus in the main body of the wearable device. For example, the first interface assembly 500 may be detachably connected to the wearable assembly 820 in a pluggable manner, thereby establishing a signal connection relationship between the speaker assembly 810 and the control board assembly 200 so that the speaker assembly 810 can generate or play a sound signal in response to the electrical signal provided by the control board assembly 200.

The second interface assembly 600 is mainly configured to connect an external regulating device (e.g., a cell phone, a computer, etc.) to perform data transmission between the external regulating device and the wearable device. Exemplarily, a working mode, working parameters, a volume level, etc., of the wearable device may be adaptively adjusted according to the user's needs by the external regulating device. The battery assembly 700 is primarily configured to power the electricity-using components in the wearable device in order to provide support for the normal operation of the wearable device.

In some embodiments, other functional components may be added to the movement assembly, or some of the functional components may be omitted. For example, by omitting the first interface component 500, the speaker assembly 810 may be directly connected to the control board assembly 200 through the wearable component 820. As another example, the second interface assembly 600 is replaced with a wireless communication module, with the aid of which data is transmitted between the wearable device and the external regulating device.

In other words, the movement assembly may include one or more of the control board assembly 200, the microphone assembly 300, the button assembly 400, the first interface assembly 500, the second interface assembly 600, and the battery component 700.

In some embodiments, based on the form of the structure inside the housing assembly 100, the functional components in the first assembly and the second assembly may also be set up interchangeably with each other. For example, the first interface component 500 is subordinate to the first assembly and is connected to the first housing 110

That is to say, the control board assembly 200, the microphone assembly 300, the button assembly 400, the first interface assembly 500, the second interface assembly 600, and the battery assembly 700, etc., may be selectively configured in in either the first housing 110 or the second housing 120 according to the structure, layout, and functional configuration of the housing assembly 100 or the main body of the wearable device.

It should be noted that the description of the "wire assembly" is introduced herein, and the wire assembly may be a wire, a row of wires, a flexible circuit board (a flexible printed circuit (FPC)), etc., to adapt to the internal structure of the housing assembly 100 and the spatial arrangement relationship between the relevant functional components, thereby flexibly establishing electrical connections among these functional components.

Based on this, with the first housing 110 and the second housing 120 serving as mounting carriers for a plurality of functional components within the wearable device, the movement assembly may be dispersedly provided in different parts of the housing assembly 100.

On the one hand, compared to the related technology, which adopts an internal skeleton independent of the housing assembly 100 as a mounting carrier for the movement assembly, the present disclosure may realize the full utilization of the structure and space of the housing and reduce a count of components inside the device, thereby facilitating the miniaturization and lightweight design of the wearable device.

On the other hand, based on the structural form of the decentralized installation of the movement assembly, the wearable device is quickly disassembled and assembled. And also, by disassembling and assembling the first housing 110 and the second housing 120, the first assembly and the second assembly may be disassembled, assembled, maintained, recycled and reused, etc., in a targeted manner.

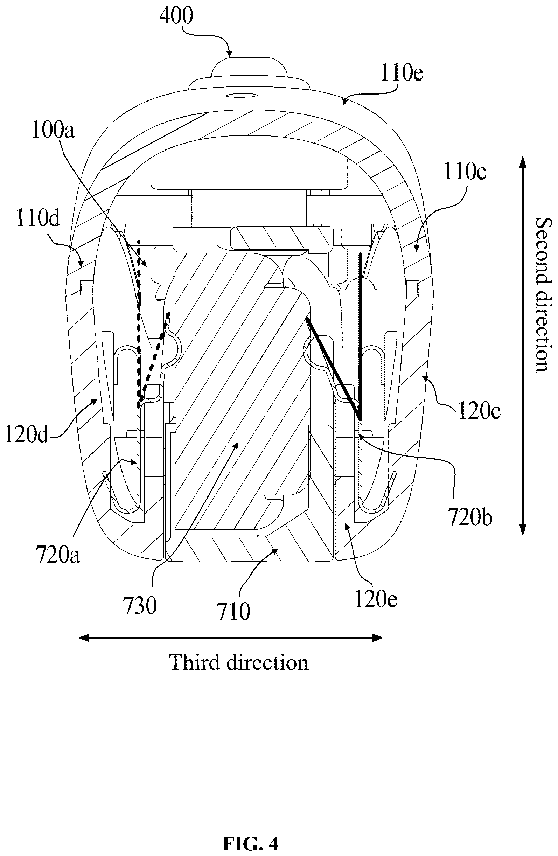

In one embodiment, referring to FIG. 4-FIG. 7, both the first housing 110 and the second housing 120 have housing structures with openings. The first housing 110 and the second housing 120 are cooperatively connected in the second direction with the openings opposite each other to form the holding cavity 100a.

In the case of the movement assembly, the first assembly (e.g., the control board assembly 200, the microphone assembly 300, the button assembly 400, etc.) is connected to an inner wall of the first housing 110 such that at least a portion of the first assembly is accommodated within the housing space of the first housing 110. The second assembly (e.g., the first interface assembly 500, the second interface assembly 600, the battery assembly 700, etc.) is connected to an inner wall of the second housing 120 such that at least a portion of the second assembly is accommodated within the housing space of the second housing 120.

Firstly, by connecting the first assembly to the inner wall of the first housing 110 and the second assembly to the inner wall of the second housing 120, it is possible to prevent the connecting structure between the movement assembly and the housing assembly 100 from being exposed in the housing assembly 100 and cause damage to the appearance of the main body of the wearable device, enhancing the aesthetic appearance of the main body of the wearable device, as well as the wearability.

Secondly, utilizing the housing space of the first housing 110 and the second housing 120 to accommodate the first assembly and the second assembly provides a certain protective effect, preventing the first assembly or the second assembly from being damaged due to bumping before assembling and molding the housing assembly 100.

Thirdly, by setting the first housing 110 and the second housing 120 as a housing structure with a certain volume space and an opening, it is convenient to assemble and mold the first housing 110 with the first assembly and the second housing 120 with the second assembly, respectively. The assembly of the main body of the wearable device may be easily and quickly completed after the wiring of the wire assembly is completed.

In some embodiments, the first housing 110 may be of a housing structure with an opening, and the second housing 120 may be of a cover structure. The second housing 120 is provided in the first housing 110 by sealing the opening of the first housing 110 to enclose the holding cavity 100a with the first housing 110. With respect to the movement assembly, the first assembly is connected to the inner wall of the first housing 110 and is accommodated in the housing space of the first housing 110. The second assembly is connected to the side of the second housing 120 that faces the first housing 110. The second assembly is equivalent to being accommodated in the housing space (e.g., the holding cavity 100a) of the first housing 110 after the combination of the first housing 110 and the second housing 120. Certainly, the first housing 110 may adopt a cover structure, while the second housing 120 adopts a housing structure with an opening.

Therefore, the housing assembly 100 is formed by the combination of the housing structure and the cover structure, which is not only conducive to realizing the rapid assembly of the main body of the wearable device, but also allows for the formation of different structural forms or assembling modes of the wearable device, thereby satisfying different application requirements.

In one embodiment, referring to FIGs. 4-7, an assembly structure is provided between the first housing 110 and the second housing 120. The assembly structure is mainly configured to fix the first housing 110 that is provided with the first assembly and the second housing 120 that is provided with the second assembly into a single unit, so as to roughly form a complete outer contour structure of the main body of the wearable device (e.g., the housing assembly 100). Thus, with the help of the housing assembly 100, the wearable device or the main body of the wearable device may be moved, carried, worn, operated, and used.

The assembly structure may adopt different structures according to the connection form between the first housing 110 and the second housing 120. For example, the assembly structure may be a relevant structure adapted to realize the connection form, such as gluing, welding, etc., between the first housing 110 and the second housing 120. As another example, the assembly structure may be a structure suitable for realizing a detachable connection, such as snap-fit, lock-fit, or the like, between the first housing 110 and the second housing 120.

Exemplarily, referring to FIG. 4-FIG. 7, the assembly structure includes a first fixing structure and a first positioning structure. The first fixing structure is mainly configured to fix the first housing 110 and the second housing 120 firmly into a single unit. The first positioning structure is mainly configured to locate the relative position between the first housing 110 and the second housing 120, to provide support for fast and accurate assembly of the first housing 110 and the second housing 120, and at the same time to enhance the structural combination strength between the first housing 110 and the second housing 120 in conjunction with the first fixing structure.

The first fixing structure includes a support arm 131 and a fixing pin 132. The support arm 131 protrudes out of an inner wall surface of the second housing 120. For example, the support arm 131 is of a one-piece structure with the second housing 120. The fixing pin 132 cooperates with the support arm 131.

The first positioning structure includes a first positioning protrusion 141 and a first positioning groove 142. The first positioning protrusion 141 protrudes out of the inner wall surface of the first housing 110, and the first positioning protrusion 141 and the first housing 110 are a one-piece structure. The first positioning groove 142 is integrally formed at a position of the second housing 120 corresponding to the first positioning protrusion 141.

In the process of assembling the first housing 110 and the second housing 120 to form the housing assembly 100, the first positioning protrusion 141 may be inserted into the first positioning groove 142 in advance by means of an alignment relationship between the first positioning protrusion 141 and the first positioning groove 142, so that the relative positions of the first housing 110 and the second housing 120 are defined. For example, an end surface of the opening of the first housing 110 abuts against an end surface of the opening of the second housing 120, so that the first space and the second space are connected to form the holding cavity 100a (at this time, the support arm 131 is located in the holding cavity 100a).

Afterwards, the fixing pin 132 is threaded into the interior of the housing assembly 100 from the exterior of the housing assembly 100 through the position of the first housing 110 corresponding to the support arm 131 (e.g., a pin hole structure may be provided at the position of the first housing 110 corresponding to the support arm 131), so as to thread and fix the first housing 110 and the support arm 131 into a single unit, ultimately realizing the detachable assembly fixing between the first housing 110 and the second housing 120.

In some embodiments, the support arm 131 and the fixing pin 132, the first positioning protrusion 141, and the first positioning groove 142 may also be positionally switched. For example, the support arm 131 protrudes out of the inner wall of the first housing 110, and the first positioning protrusion 141 protrudes out of the inner wall of the second housing 120.

With the cooperation of the first fixing structure and the first positioning structure, the assembly and fixing of the first housing 110 and the second housing 120 may be realized easily, quickly and accurately, to effectively enhance the structural solidity of the housing assembly 100 (or the outer shell of the device), and also to provide structural support for the disassembling and assembling of the main body of the wearable device or the housing assembly 100.

For example, in the process of assembling the main body of the wearable device or the housing assembly 100, the first positioning protrusion 141 may be first inserted into the corresponding first positioning groove 142, and the fixing pin 132 is then inserted using a cooperation relationship between the support arm 131 and the fixing pin 132, to finally assemble and fix the first housing 110 and the second housing 120 to form the housing assembly 100. In this way, the accuracy of the combination of the first housing 110 and the second housing 120 may be ensured.

For example, when the main body of the wearable device needs to be disassembled and maintained, only the fixing pin 132 needs to be withdrawn to realize the disassembly of the housing assembly 100, so as to inspect and maintain the internal structure of the main body of the wearable device and the related components.

In some embodiments, the first fixing structure and the first positioning structure may also be of other structural forms.

For example, a plurality of snap structures that cooperate with each other are provided on the first housing 110 and the second housing 120, and the snap structures are utilized to replace the first fixing structure and the first positioning structure to realize the assembly and fixing of the first housing 110 and the second housing 120.

As another example, a convex shaft structure is provided on a position on the inner wall of the first housing 110 corresponding to the support arm 131, and a pin hole structure is provided on the support arm 131 for the insertion and embedding of the convex shaft structure, so that the first fixing structure is formed through the cooperation of the convex shaft structure and the pin hole structure. Therefore, with the cooperation of the first positioning structure, the first housing 110 and the second housing 120 are located and fixed at different positions and in different directions.

In some embodiments, the first fixing structure may be omitted, and the first housing 110 and the second housing 120 may be pre-located by setting one or more first positioning structures, then the first housing 110 and the second housing 120 may be fixed by gluing, welding, or the like.

Certainly, it is also possible to omit the first positioning structure. The first housing 110 and the second housing 120 are fixed and connected from a plurality of different positions by providing a plurality of sets of support arms 131 and fixing pins 132. For these and other reasons, they will not be elaborated further here.

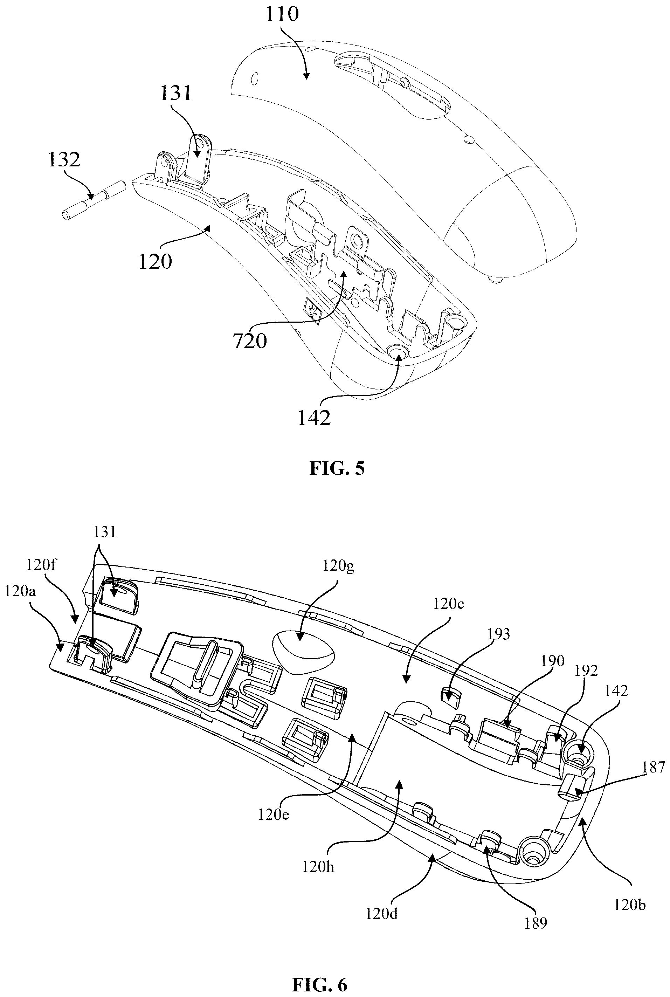

In one embodiment, referring to FIG. 4 and FIG. 5, the first housing 110 and the second housing 120 are opposite to each other and cooperatively connected to each other in the second direction to form the housing assembly 100, and the first fixing structure and the first positioning structure are provided on two ends of the housing assembly 100 that are opposite to each other in the first direction. For the convenience of description, the two ends of the housing assembly 100 that are opposite to each other in the first direction or the length direction may be defined as a first end and a second end of the housing assembly 100. When the wearable device is in a normally worn state, the first end of the housing assembly 100 may be a top end of the housing assembly 100, and the second end of the housing assembly 100 may be a bottom end of the housing assembly 100. The first fixing structure is provided at the first end of the housing assembly 100, and the first positioning structure is provided at the second end of the housing assembly 100.

By providing the first fixing structure and the first positioning structure at the two ends of the housing assembly 100 that are opposite to each other, the first housing 110 and the second housing 120 may be located and fitted together with the help of the first positioning structure in advance during the assembly process, and then the first housing 110 and the second housing 120 may be fixed with the help of the cooperation relationship between the fixing pin 132 and the support arm 131. In this way, it is conducive to the assemblers to quickly and accurately identify the assembly direction of the first housing 110 and the second housing 120 and to improve the efficiency of assembling the housing assembly 100 or the main body of the wearable device. Meanwhile, it is also convenient to inspect and maintain the housing assembly 100 and the related functional components by dismantling the housing assembly 100.

In some embodiments, the control board assembly 200, the microphone assembly 300, or the like are connected to the inner wall of the first housing 110. The first interface assembly 500, the battery assembly 700, or the like are connected to the inner wall of the second housing 120. The first housing 110 and the second housing 120 are both of a housing structure. The support arm 131 protrudes out of the inner wall of the second housing 120 substantially along the second direction toward a side where the first housing 110 is located. The fixing pin 132 is arranged through the first housing 110 and the support arm 131 substantially along the third direction. Accordingly, the first positioning protrusion 141 protrudes out of the inner wall or the end surface of the opening of the second housing 120 substantially in the second direction toward the side where the second housing 120 is located.

Therefore, based on the differentiated setting of the arrangement direction of the support arm 131 and the first positioning protrusion 141, the combination of the second housing 120 and the second assembly may be regarded as the main body for installation. This guides assemblers to quickly and accurately assemble the combination of the first housing 110 and the first assembly into the first housing 110 on the main body for installation.

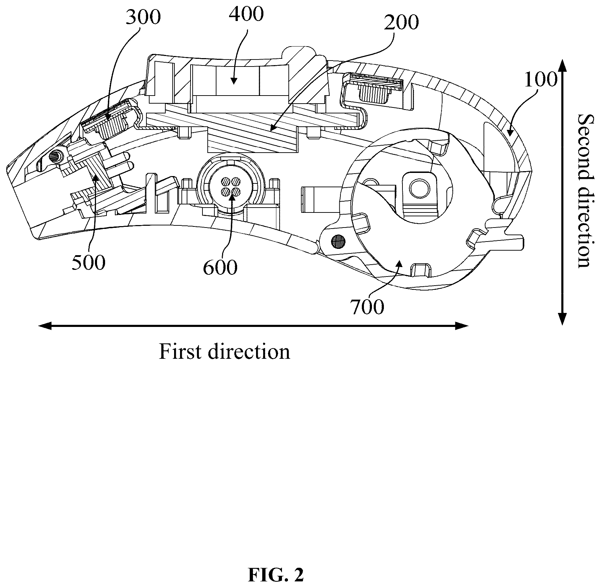

In one embodiment, referring to FIG. 2-FIG. 12, the first housing 110 and the second housing 120 adopts a housing structure, and the movement assembly includes a control board assembly 200, a microphone assembly 300, a button assembly 400, a first interface assembly 500, a second interface assembly 600, and a battery assembly 700.

For ease of differentiation and description, two housing walls of the first housing 110 that are opposite to each other in the first direction are defined as a first housing wall 110a and a second housing wall 110b, two housing walls that are opposite to each other in the third direction are defined as a third housing wall 110c and a fourth housing wall 110d, and a housing wall that is connected between the first housing wall 110a, the second housing wall 110b, the third housing wall 110c, and the fourth housing wall 110d in the second direction is defined as a fifth housing wall 110e.

Two housing walls of the second housing 120 that are opposite to each other in the first direction are defined as a sixth housing wall 120a and a seventh housing wall 120b, two housing walls that are opposite to each other in the third direction are defined as an eighth housing wall 120c and a ninth housing wall 120d, and a housing wall that is connected between the sixth housing wall 120a, the seventh housing wall 120b, the eighth housing wall 120c, and the ninth housing wall 120d in the second direction is defined as a tenth housing wall 120e.

The combination of the first housing wall 110a and the sixth housing wall 120a forms a first side wall of the housing assembly 100, and the combination of the second housing wall 110b and the seventh housing wall 120b forms a second side wall of the housing assembly 100. The fifth housing wall 110e and the tenth housing wall 120e may be understood to be a third side wall and a fourth side wall of the housing assembly 100 that are opposite to each other in the second direction. The combination of the third housing wall 110c and the eighth housing wall 120c forms a fifth side wall of the housing assembly 100, and the combination of the fourth housing wall 110d and the ninth housing wall 120d forms a sixth side wall of the housing assembly 100. It will be appreciated that the first side wall, the second side wall, the third side wall, the fourth side wall, the fifth side wall, and the sixth side wall of the housing assembly 100 are connected to enclose the holding cavity 100a.

Referring to FIG. 2, the control board assembly 200 is provided in the interior of the housing assembly 100 (e.g., fixedly connected to the third side wall (e.g., the fifth housing wall 110e)). The microphone assembly 300, which may be a collection of related functional components capable of forming an air-conducted sound, is fixedly provided on the third side wall, and maintains an air path connection with the exterior of the housing assembly 100 at the third side wall.

Exemplarily, a sound pickup hole 110f may be provided through the position on the third side wall (e.g., the fifth housing wall 110e) corresponding to the microphone assembly 300, and the sound pickup hole 110f is connected to the microphone assembly 300. The external sound signal is conducted to the microphone assembly 300 using air as a medium to cause the microphone assembly 300 to realize the acquisition of the sound signal by generating mechanical vibration.

Exemplarily, a sound conduit line may also be provided within the holding cavity 100a, and the microphone assembly 300 is connected to the exterior of the housing assembly 100 via the sound conduit line to enable the acquisition of the sound signal.

In some embodiments, see FIG. 2, the wearable device includes two microphone assemblies 300, and the two microphone assemblies 300 are arranged on two sides of the control board assembly 200 that are opposite to each other in the first direction. With respect to the main body of the wearable device, the two microphone assemblies 300 may be configured to capture the sound signal from different directions.

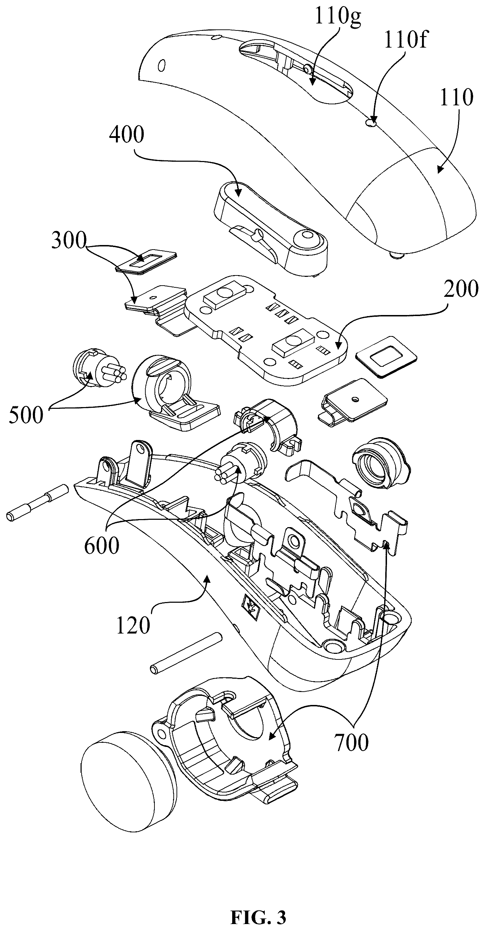

Referring to FIGs. 2 and 3, the button assembly 400 is provided in the holding cavity 100a in the form of a movable connection (e.g., a rotational connection, a sliding connection, etc.) with the inner wall of the first housing 110, and the button assembly 400 is at least partially exposed to the third side wall.

For example, the button assembly 400 is arranged on a side of the control board assembly 200 facing the third side wall in the second direction, a button window 110g is provided through a position of the third side wall corresponding to the button assembly 400, and the button assembly 400 is exposed and protrudes out of the button window 110g.

By applying a pressing force toward the control board assembly 200 to the button assembly 400, the button assembly 400 may be induced to press button switches on the control board assembly 200 to realize the input of the preset command.

In some embodiments, the button assembly 400 may also include a switching component capable of generating an electrical signal, the button assembly 400 is electrically connected to the control board assembly 200, and the command information is input to the control board assembly 200 by triggering the button assembly 400.

Referring to FIG. 2, the first interface assembly 500 is fixedly connected to the second housing 120 (e.g., fixed to the fourth side wall) by at least partially exposing to the first side wall and is arranged in the holding cavity 100a. Exemplarily, a first connection port 120f may be provided through the first side wall, and an interface end of the first interface assembly 500 may be directly opposite the first connection port 120f. The interface end of the first interface assembly 500 may extend into the first connection port 120f and may also extend out of the housing assembly 100 from the first connection port 120f.

Accordingly, an interface structure capable of being in pluggable adaptive connection with the first interface assembly 500 may be provided on the speaker apparatus (specifically, at the end of the wearable assembly 820 away from the speaker assembly 810). The interface structure and the first interface assembly 500 are used to fix the speaker apparatus to the main body of the wearable device to realize an electrical connection between the speaker apparatus and the movement assembly (e.g., the control board assembly 200).

Referring to FIGs. 2 and 6, the second interface assembly 600 is fixedly connected to the second housing 120 (e.g., fixed to the fourth side wall) by at least partially exposing to the fifth side wall and is arranged within the holding cavity 100a. Exemplarily, the second connection port 120g may be provided through the fifth side wall (e.g., the eighth housing wall 120c), the interface end of the second interface assembly 600 may be arranged opposite the second connection port 120g, and the interface end of the second interface assembly 600 may also extend into the second connection port 120g. When applying the wearable device, the second interface assembly 600 may be utilized to connect to an external regulating device such as a cell phone, a computer, or the like, in order to make adaptive adjustments to the working mode, the working parameters, or the like of the wearable device according to the user's needs.

Referring to FIG. 2-FIG. 4 and FIG. 6, the battery assembly 700 may be fixedly connected to the second housing 120 or movably connected to the second housing 120. Exemplarily, the battery window 120h may be provided in a region where the second side wall meets the fourth side wall, and the battery assembly 700 is rotatably connected to the second housing 120, so that the battery assembly 700 may enter and exit the holding cavity 100a through the battery window 120h by rotating the battery assembly 700, which facilitates battery replacement.

Based on this, by dispersing the various parts of the movement assembly in different positions or different directions of the housing assembly 100, not only the structure and space of the housing assembly 100 is utilized reasonably to ensure the performance of the wearable device, but also the operation of the wearable device is facilitated.

For example, by arranging the first interface assembly 500 and the battery assembly 700 at two opposite ends of the main body of the wearable device in the first direction, and arranging the button assembly 400 in a position between the first interface assembly 500 and the battery assembly 700 in the first direction, on the one hand, it is not only convenient to connect the speaker apparatus (e.g., the wearable component 820) via the first interface assembly 500, but also convenient to replace the battery in the battery assembly 700. On the other hand, when the device is in a worn state, the button assembly 400 may be located at a position substantially in the middle of the rear side or at a position at the lower rear side of the main body of the wearable device, which not only facilitates operation of the button assembly 400, but also avoids structural interference of the first interface assembly 500 and the battery assembly 700 with the button assembly 400.

As another example, by arranging the two microphone assemblies 300 on two opposite sides of the button assembly 400 or the control board assembly 200 in the first direction, a curved surface structure adopted by the third side wall may be used, so that the sound pickup holes 110f corresponding to the two microphone assemblies 300 may be made to face different directions, thereby effectively avoiding that the external sound signal is blocked by the body parts of the user, ensuring the effect of the microphone assemblies 300 on the acquisition of the sound signal.

In some embodiments, when the wearable device is in a normally worn state, such as a state in which the main body of the wearable device relies on the wearable assembly 820 to be suspended on the dorsal side of the ear of the user, and the speaker assembly 810 is inserted into the ear canal of the user.

The first side wall is a side wall facing the front side of the user in the first direction, the second side wall is a side wall facing the lower side of the ear of the user in the first direction, and the third side wall is a side wall back away from area region where the head of the user meets the dorsal side of the ear in the second direction. The fourth side wall is a side wall facing or touching the region where the head of the user meets the dorsal side of the ear in the second direction, the fifth side wall is a side wall facing or touching the dorsal side of the ear of the user in the third direction, and the sixth side wall is a side wall facing or touching the head of the user in the third direction.

Referring to FIG. 1 to FIG. 3 and FIG.5, the dimensions of the housing assembly 100 in the first direction are set to be larger than the dimensions of the housing assembly 100 in the second direction and the third direction. The third side wall and the fourth side wall are set to be curved surface structures capable of adapting to the physiological structural direction of the region where the dorsal side of the ear meets the head. For a geometric centerline of the housing assembly 100 in the first direction, the geometric centerline is provided as an arcuate segment.

In this way, based on the dimensional differences of the housing assembly 100 in the different directions and the structural form of the side walls, the outer contour of the housing assembly 100 or the main body of the wearable device is constructed as a mimetic structure, to enable the housing assembly 100 or the main body of the wearable device to be adapted to physiological structural morphology between the dorsal side of the ear and the head, so as to be worn on the ear in the form of being clamped or hanging on the ear.

In embodiments in which the housing assembly 100 adopts the mimetic structure, the dimension of the housing assembly 100 in the third direction may be set such that the dimension of the housing assembly 100 in the third direction is progressively decreasing from the side on which the second side wall is located towards the side on which the first side wall is located. For example, the dimension of the first end of the housing assembly 100 in the third direction is smaller than the dimension of the second end in the third direction. As a result, it is possible to make the width dimension of the end of the main body of the wearable device that connects the speaker in the first direction (e.g., the end at which the first interface assembly 500 is located) smaller than the width dimension of the end at which the battery assembly 500 is located, which accommodates the requirements of the battery assembly 500 for the space dimension of the housing assembly 100.

In some embodiments, the housing assembly 100 is made of polyimide (PI), such as a one-piece structure in which both the first housing 110 and the second housing 120 are made of PI, both of which are connected opposite to each other to form the housing assembly 100.

Compared to related technologies in which the outer shell of the wearable device is made of polycarbonate (PC), ABS plastic (e.g., a terpolymer formed from the three monomers: acrylonitrile (A), butadiene (B), and styrene (S)), etc., in this embodiment, based on the good biocompatibility, mechanical strength and other characteristics of the PI material, the structural form (including an appearance form) of the housing assembly 100 may be made more stable, and the thickness of the housing is thinner, which is conducive to realizing the miniaturization and lightweighting of the wearable device, and enhancing the stability of the overall structure of the housing assembly 100.

As previously mentioned, the wearable device or the main body of the wearable device may include the battery assembly 700, and the battery assembly 700 is arranged in the accommodating cavity 100a by directly connecting to the housing assembly 100. The following is a description of the battery assembly 700 and its related structure, mainly in terms of the battery assembly 700 being connected to the second housing 120 as an example. However, it is to be noted that the battery assembly 700 may also be connected to the first housing 110 or other suitable structural forms of the outer shell of the wearable device.

In one embodiment, referring to FIG. 2-FIG. 6, and FIG. 8-FIG. 14, the second housing 120 is provided with a battery window 120h provided through the seventh housing wall 120b and the tenth housing wall 120e, and the battery window 120h connects the accommodating cavity 100a to the exterior of the housing assembly 100. In the case of the housing assembly 100, the battery window 120h may be a strip window provided through the second side wall and the fourth side wall 100c. Thus, in some embodiments, a width direction of the battery window 120h may be understood to be the third direction of the housing assembly 100, and a length direction of the battery window 120h may be understood to be a direction around the third direction of the housing assembly 100.

The battery assembly 700 includes a battery bracket 710 configured to mount a battery 730 and an electrode elastic piece 720 configured to electrically connect the control board assembly 200. A second pivot structure and a locking structure are formed between the battery bracket 710 and the second housing 120. The second pivot structure is configured to establish a relatively rotatable structural connection relationship between the battery bracket 710 and the second housing 120, to enable the battery bracket 710 to rotate around the second pivot structure relative to the second housing 120 (the second pivot structure or a direction of a rotation axis of the battery bracket 710 is the third direction), thereby enabling the battery bracket 710 to enter and exit the accommodating cavity 100a via the battery window 120h. The locking structure is configured to lock the battery bracket 710 to the second housing 120 (e.g., to keep the battery bracket 710 within the accommodating cavity 100a). For example, the locking structure is capable of locking the battery bracket 710 to the second housing 120 in a state in which the battery bracket 710 closes the battery window 120h.

The electrode elastic piece 720 is provided in the accommodating cavity 100a and is fixedly connected to the second housing 120. For example, two electrode elastic pieces 720 are provided, and the two electrode elastic pieces 720 are provided on two opposite sides of the battery window 120h in the third direction. When the battery bracket 710 is locked to the second housing 120 by the locking structure so that the battery 730 that is provided on the battery bracket 710 is located in the accommodating cavity 100a, one end of each of the two electrode elastic pieces 720 may elastically abut against a positive electrode and a negative electrode of the battery 730, and the other end of each of the two electrode elastic pieces 720 may be electrically connected to the control board assembly 200 via the wire assembly.

On the one hand, using the second housing 120 as a mounting carrier for the battery assembly 700, by dispersing the components of the battery assembly 700 (e.g., the battery bracket 710 and the electrode elastic piece 720) in the second housing 120, the structural space of the second housing 120 or the housing assembly 100 may be fully utilized, which is conducive to realizing the lightweight and miniaturization design of the wearable device.

On the other hand, by utilizing the structural feature that the battery bracket 710 may be transferred out of the housing assembly 100 via the battery window 120h, the battery 730 may be easily replaced. After the battery bracket 710 is transferred into the accommodating cavity 100a, it may adapt to the structural form of the battery window 120h to realize the closure of the battery window 120h, thereby maintaining the structural integrity of the outer contour of the main body of the wearable device.

It should be noted that the description of the battery 730 is introduced in the present embodiment solely for the purpose of understanding the structural construction and functional principles of the battery bracket 710 and does not mean that the battery 730 is necessarily a component of the battery assembly 700. That is, in some embodiments, the battery 730 may be an integral component of the battery assembly 700; in other embodiments, the battery 730 may also be a consumable used in conjunction with the wearable device.

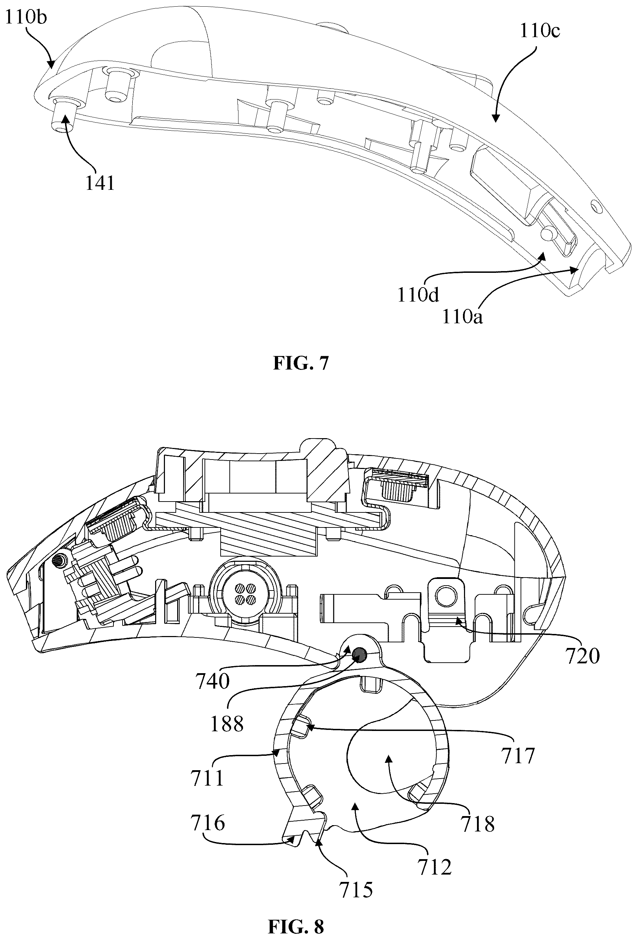

In one embodiment, referring to FIG. 8-FIG. 12, the battery bracket 710 includes a peripheral wall portion 711 and an end wall portion 712 connected to each other. The peripheral wall portion 711 extends or surrounds a geometric centerline of the end wall portion 712 to form a battery compartment between the peripheral wall portion 711 and the end wall portion 712 for accommodating the battery 730. It is also understood that the overall contour of the battery bracket 710 is substantially a cylinder structure with an opening on a single end. For example, the battery compartment may mount a button cell battery, and opening ends of the end wall portion 712 and the battery compartment are opposite to the negative terminal and the positive terminal, respectively, of the battery 730.

The second pivot structure and the locking structure are provided outside the battery compartment. The second pivot structure may be formed between the second housing 120 and the peripheral wall portion 711. An axis of the second pivot structure (or the rotation axis of the battery bracket 710) is parallel to the geometric centerline of the battery compartment. The locking structure may be formed between the second housing 120 and the peripheral wall portion 711 or the end wall portion 712.

In terms of the relative positional relationship between the second pivot structure, the locking structure, and the battery window 120h, the second pivot structure and the locking structure are provided on two opposite sides of the battery window 120h in the length direction. From the perspective of the main body of the wearable device, the locking structure may be located at a bottom end of the main body of the wearable device or the housing assembly 100 in the up-down direction of the user.

Therefore, the battery bracket 710 may be unlocked and rotated easily and quickly at the end where the locking structure is located (e.g., the bottom end of the main body of the wearable device), thus enhancing the operating experience. At the same time, in some embodiments in which the housing assembly 100 adopts the mimetic structure, the length trajectory of the battery window 120h is roughly an arc segment, as the battery window 120h is equivalent to a strip window provided through the second side wall and the fourth side wall of the housing assembly 100. Thus, the peripheral wall portion 711 may be well adapted to the curved shape of the battery window 120h by means of the peripheral wall portion 711, and the closure of the battery window 120h is realized by the peripheral wall portion 711, thereby ensuring the integrity of the structural shape of the outer contour of the main body of the wearable device.

In other embodiments, the battery bracket 710 may also be in other structural forms. For example, the battery bracket 710 may be provided in a cover structure that is substantially the same as or matches the structural form of the battery window 120h, and the battery 730, as a detachable form, is placed on the second housing 120 and in the accommodating cavity 100a, and the battery window 120h may be opened or closed by the battery bracket 710. After the battery window 120h is opened, the battery 730 in the accommodating cavity 100a may be removed for replacement of the battery 730. Certainly, other suitable structural components may be used for the electrode elastic piece 720.

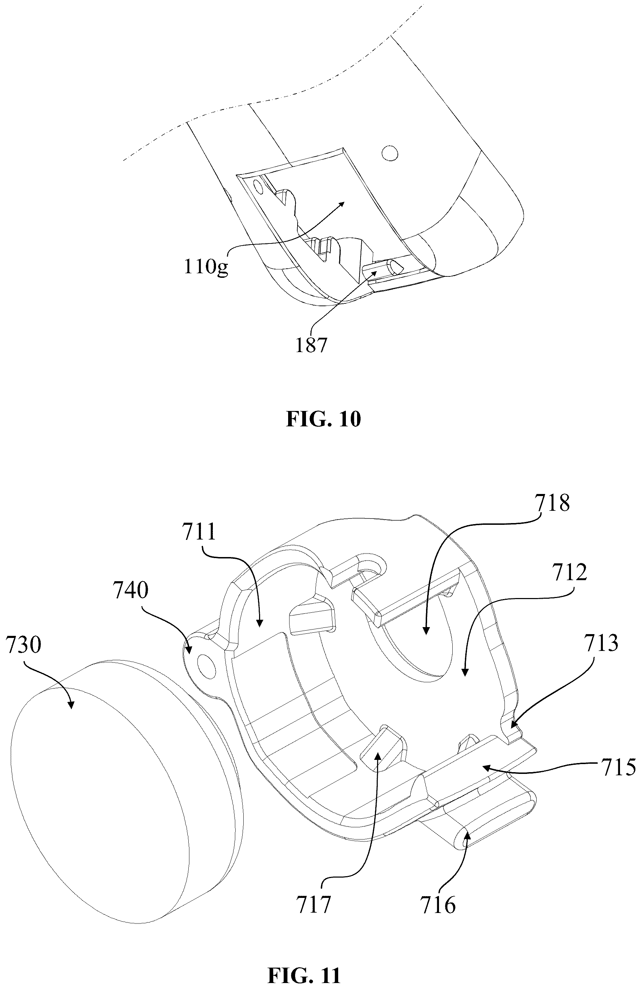

In one embodiment, referring to FIGs. 8 and 11 and in conjunction with FIG. 2, the locking structure includes a locking protrusion 187 and a locking slot 713. The locking protrusion 187 protrudes out of an inner wall (e.g., the seventh housing wall 110b) of the second housing 120 provided near the battery window 120h. The locking slot 713 is provided at a position where the peripheral wall portion 711 or the end wall portion 712 interfaces.

When the battery bracket 710 is rotated to a preset angular position toward the accommodating cavity 100a via the battery window 120h, the locking protrusion 187 may be embedded in the locking slot 713, thereby limiting the battery bracket 710 from further rotation and locking the battery bracket 710 to the second housing.

In some embodiments, the battery bracket 710 and the housing assembly 100 may be made of plastic. For example, the battery bracket 710 is a one-piece structure made of PI, and the second housing 120 is a one-piece structure made of PI.

On the one hand, the locking protrusion 187 formed in the second housing 120 may be snapped into the locking slot 713 in an overfilled form. Thus, the battery bracket 710 is stably locked to the second housing 120 by utilizing the material properties of either the battery bracket 710 or the second housing 120, which allow for elastic deformation. On the other hand, the battery bracket 710 and the housing assembly 100, as components capable of contacting human skin, have good biocompatibility and stable structural strength.

In some embodiments, the locking protrusion 187 may also be provided outside the battery compartment by protruding out of the peripheral wall portion 711 or the end wall portion 712, and the locking slot 713 is provided on the inner wall of the second housing 120, which will not be repeated herein.

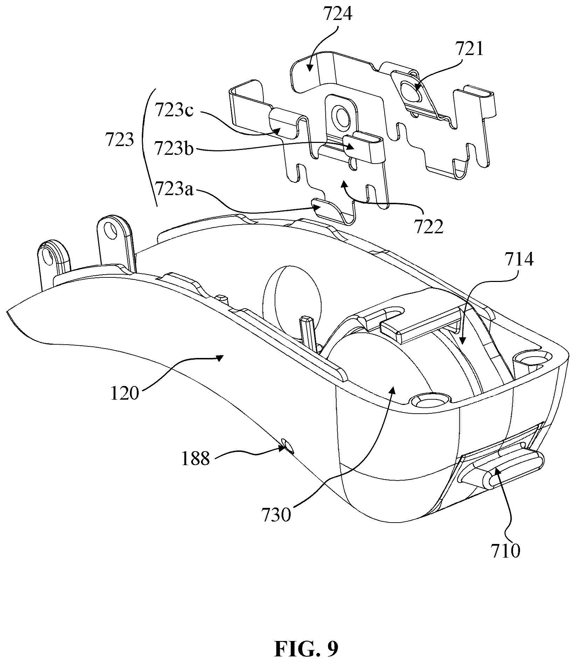

In one embodiment, referring to FIG. 9, the peripheral wall portion 711 is provided with a third avoidance notch 714, and the third avoidance notch 714 extends from an end of the peripheral wall portion 711 away from the end wall portion 712 in the width direction of battery window 120h to the end wall portion 712. It may also be understood that the locking slot 713 is provided through the peripheral wall portion 711 in a direction of the geometric centerline of the battery compartment.

Correspondingly, the locking slot 713 is provided at a contour edge of the end wall portion 712 and is in communication with the third avoidance notch 714. It is also understood that the locking slot 713 is provided at a position where the contour edge of the end wall portion 712 corresponds to the third avoidance notch 714.

Using the third avoidance notch 714 allows structural deformation of the peripheral wall portion 711 or the battery bracket 710, which facilitates the placement of the battery 730 in or the removal of the battery 730 from the battery compartment, and provides structural support for providing the locking slot 713.

In one embodiment, in the state where the battery bracket 710 (specifically, the peripheral wall portion 711) closes the battery window 120h, the third avoidance notch 714 is located within the accommodating cavity 100a, thereby affecting the exterior structure of the main body of the wearable device due to the exposure of the third avoidance notch 714 or the battery 730 may be avoided.

In one embodiment, referring to FIG. 8 and FIG. 11, the battery bracket 710 also has a limiting portion 715, which protrudes out of an outer wall surface of the peripheral wall portion 711. For example, the limiting portion 715 protrudes out of the peripheral wall portion 711 at the third avoidance notch 714. As another example, the limiting portion 715 protrudes out of a position of the peripheral wall portion 711 near the locking structure.

When the battery bracket 710 is rotated to a preset angular position via the battery window 120h toward the accommodating cavity 100a, the limiting portion 715 may be utilized to abut against the inner wall of the second housing 120 (e.g., the wall of the battery window 120h in the length direction) within the battery window 120h to limit the battery bracket 710 from continuing to rotate, such that the locking protrusion 187 may be precisely embedded in the locking slot 713. In this way, the limiting portion 715 may be utilized to both limit the rotation angle of the battery bracket 710 and to securely lock the battery bracket 710 in the accommodating cavity 100a in conjunction with the locking structure.

In one embodiment, referring to FIG. 8-FIG. 10, the battery bracket 710 also includes an operating portion 716, and the operating portion 716 protrudes out of an outer peripheral surface of the peripheral wall portion 711. In a state in which the battery bracket 710 or the peripheral wall portion 711 closes the battery window 120h, the operating portion 716 protrudes out of the peripheral wall portion 711. In terms of a specific setting position of the operating portion 716 on the peripheral wall portion 711, the operating portion 716 may be provided on a position of the peripheral wall portion 711 close to the locking structure or the limiting portion 715.

With the help of the operating portion 716, a force may be exerted on the battery bracket 710 to cause it to rotate relative to the second housing 120, for example, by pivoting the operating portion 716 to cause the battery bracket 710 to rotate in and out of the accommodating cavity 100a.

In one embodiment, referring to FIG. 8 and FIG. 11, the battery bracket 710 also includes a fool-proof portion 717 mainly for recognizing the mounting direction of the battery 730 so as to avoid counter-mounting of the battery 730. The fool-proof portion 717 is arranged in the battery compartment and protrudes out of a junction between the end wall portion 712 and the end wall portion 712. For example, the fool-proof portion 717 may be a plurality of projections evenly spaced apart around the end wall portion 712 or the geometric centerline of the battery compartment.

For example, if the battery 730 is a coin cell battery, since the positive end of the coin cell battery has a different size or structural from the negative end, in the state in which the battery 730 is correctly placed inside the battery compartment, the fool-proof portion 717 may abut against the battery 730 from the negative end of the battery 730, and the positive end of the battery 730 may be held substantially flush with the opening of the battery compartment. If the battery 730 is provided in reverse, the limitation of the fool-proof portion 717 causes the battery 730 to protrude out of the battery compartment from the opening end of the battery compartment. As a result, the use of the fool-proof portion 717 supports the user in recognizing the mounting direction of the battery 730.

In some embodiments, a fool-proof marker may also be provided within the battery compartment, and the fool-proof marker may be a patch printed with a pattern or text and fixed to the inner surface of the end wall portion 712 or the peripheral wall portion 711 by pasting. The fool-proof marker may also be directly provided on the inner surface of the end wall portion 712 or the peripheral wall portion 711.

In one embodiment, referring to FIG. 8, FIG. 11, and FIG. 12, the battery bracket 710 also includes an electrode window 718 provided through the end wall portion 712. The electrode window 718 extends along the rotation track of the battery bracket 710 from the geometric center of the end wall portion 712 to the junction between the end wall portion 712 and the peripheral wall portion 711. It can also be understood that the electrode window 718 is an arc-shaped window structure arranged along the rotation track of the battery bracket 710.

The electrode window 718 is mainly configured to provide structural support for the elastic contact connection between the electrode elastic piece 720 and the battery 730. Specifically, in the process of rotating the battery bracket 710 carrying the battery 730 into the accommodating cavity 100a via the battery window 120h, based on the existence of the electrode window 718, structural interference between the electrode elastic piece 720 and the battery bracket 710 may be avoided, so that the electrode elastic piece 720 is always located within the contour of the electrode window 718. When the battery bracket 710 is rotated to an angular position locked by the locking structure in the second housing 120, the electrode elastic piece 720 may be kept in contact with the battery 730 precisely at the geometric center of the end wall portion 712 (e.g., elastically contacting the center of the negative end of the button cell battery).

It will be appreciated that one end of the peripheral wall portion 711 is connected to the end wall portion 712 in the direction (e.g., in the third direction) of the rotation axis of the second pivot structure, and is enclosed around the geometric centerline of the end wall portion 712, so that an opening that communicates with the battery compartment may be formed at one end of the peripheral wall portion 712 that is away from the end wall portion 712, and the opening is the opening or the opening end of the battery compartment. The electrode window 718 is opposite to the opening, and the electrode elastic piece 720 may elastically abut against the battery 730 located in the battery compartment via the electrode window 718 and the opening.

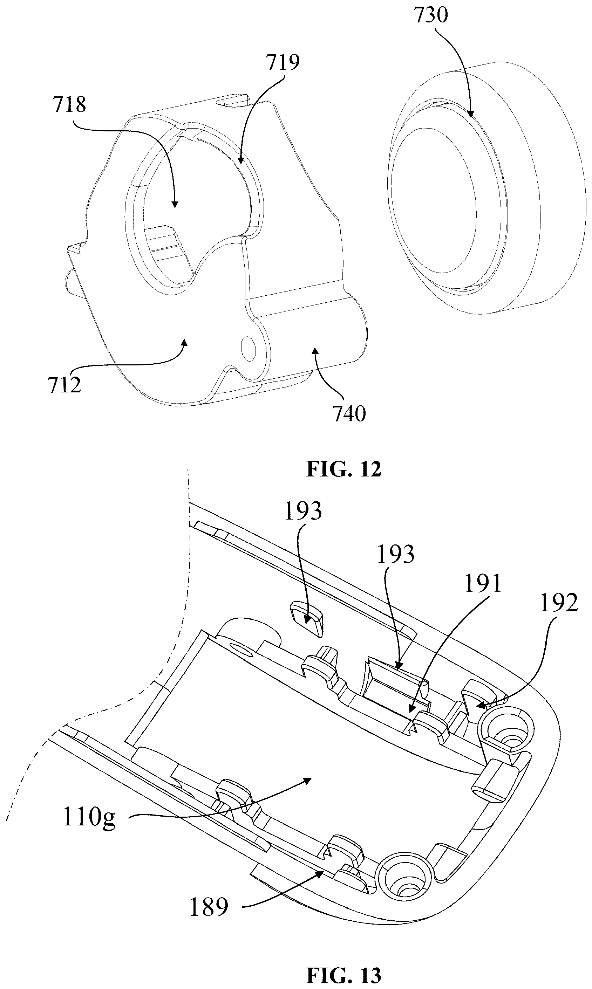

In one embodiment, referring to FIG. 12, the peripheral wall portion 711 is further provided with a fourth avoidance notch 719 through the peripheral wall portion 711, which is in communication with the electrode window 718. The use of the fourth avoidance notch 719 further eliminates the need for the battery bracket 710 to be connected to the electrode elastic piece 718, ensuring that the battery bracket 710 may be rotated normally and smoothly relative to the second housing 120 without interference from the electrode elastic piece 720.

In one embodiment, referring to FIG. 8, FIG. 9, FIG. 11, and FIG. 12, the second pivot structure includes a shaft sleeve portion 740 and a shaft rod portion 188. The shaft sleeve portion 740 protrudes out of the outer surface of the peripheral wall portion 711, and the shaft rod portion 188 is provided through the shaft sleeve portion 740 and the second housing 120 in a direction parallel to the geometric centerline of the battery compartment or in a width direction of the battery window 120h. For example, the shaft rod portion 188 is provided through the eighth housing wall 120c, the shaft sleeve portion 740, and the ninth housing wall 120d, to establish a rotational connection relationship between the second housing 120 and the battery bracket 710.

In other embodiments, the shaft rod portion 188 may also be a raised structure protruding out of the two inner walls provided opposite to each other of the second housing 120 in the width direction of the battery window 120h, which may be inserted into the shaft sleeve portion 740, thereby realizing a rotational connection between the second housing 120 and the battery bracket 710. For these and other reasons, they will not be elaborated further here.

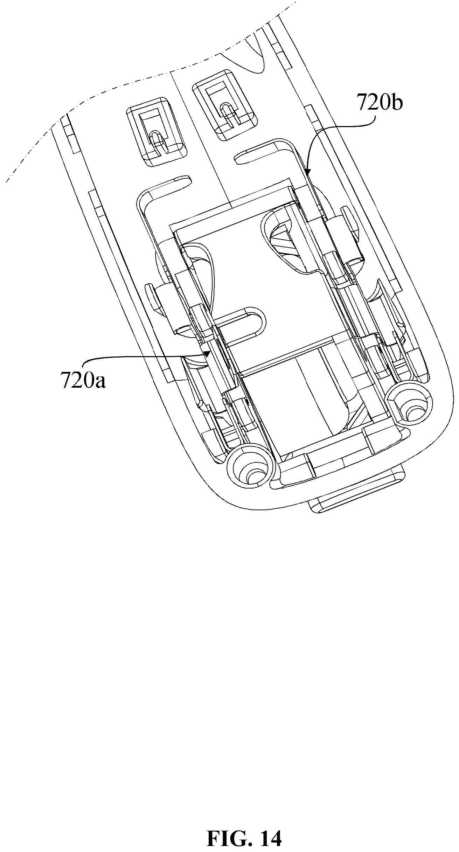

In one embodiment, referring to FIGs. 13 and 14, the second housing 120 is provided with two electrode slots 189, and the two electrode slots 189 are provided on two opposite sides of the battery window 120h in the width direction of the battery window 120h (or in the third direction of the housing assembly 100), and the electrode slots 189 are configured to accommodate a corresponding electrode elastic piece 720 in a fixed position.

For ease of differentiation and description, two slot walls of the electrode slot 189 that are spaced apart from each other in the width direction of the battery window 120h are defined as a first slot side wall and a second slot side wall, and a slot wall that is connected between the first slot side wall and the second slot side wall is defined as a slot bottom wall. In the width direction of the battery window 120h, the first slot side wall is provided on a side away from the battery window 120h, and the second slot side wall is provided on a side close to the battery window 120h.

Exemplarily, using the second housing 120 as a baseline for description, a raised retaining wall may be provided at a position where the tenth housing wall 120e is located at an edge of the contour of the battery window 120h to form the second slot side wall. The first slot side wall may be a portion of the eighth housing wall 120c and a portion of the ninth housing wall 120d that are opposite to the corresponding second slot side wall. The slot bottom wall may be a portion of the tenth housing wall 120e.

With respect to the electrode elastic piece 720, referring to FIG. 9, the electrode elastic piece 720 includes a contact portion 721, a substrate portion 722, and a plurality of elastic portions 723. The substrate portion 722 is configured to abut against or contact the second slot side wall within the electrode slot 189. The contact portion 721 is connected to the substrate portion 722 and protrudes out of the electrode slot 189, and is mainly configured to elastically abut against the battery 730 provided on the battery support 710. The elastic portions 723 and the substrate portion 721 are spaced apart from each other in the width direction (or the third direction) of the battery window 120h, and are mainly configured to abut against or contact the first slot side wall within the electrode slot 189.

Fixed ends of the plurality of elastic portions 723 are each in a bending engagement with the substrate portion 722, and at least two of the plurality of elastic portions 723 are bent in a different direction with respect to the substrate portion 722. For example, a fixed end of one of the plurality of elastic portions 723 is in a bending engagement with the substrate portion 722 in the first direction, and the slot bottom wall may be a part of the tenth housing wall 120e, and a fixed end of the other one of the plurality of elastic portions 723 is in a bending engagement with the substrate portion 722 in the second direction.

On the one hand, through the structural feature that the substrate portion 722 and the elastic portion 723 are in the bending engagement and spaced apart, it is possible to rely on the ability of the electrode elastic piece 720 to produce elastic deformation on its own, so that the elastic portion 723 abuts against the first slot side wall and the substrate portion 722 abuts against the second slot side wall, so that the electrode elastic piece 720 is securely inserted and fixed in the electrode slot 189, and thus the contact portion 721 may be maintained in a position where it can elastically contact the battery 730.

On the other hand, by utilizing the difference in the bending direction of the plurality of elastic portions 723 with respect to the substrate portion 722, it is possible to limit the electrode elastic piece 720 to be fixed within the electrode slot 189 in different directions, for example, limiting the electrode elastic piece 720 to be fixed in the first direction, the second direction, and the third direction, etc., to move within the electrode slot 189, ensuring the solidity of the structural connection between the electrode elastic piece 720 and the second housing 120.

In one embodiment, referring to FIG. 9, the plurality of elastic portions 723 include a first elastic portion 723a, and a fixed end of the first elastic portion 723a is in a bending engagement with an end of the substrate portion 722 close to the slot bottom wall in the second direction. A gap between the first elastic portion 723a and the substrate portion 722 may gradually increase from the fixed end of the first elastic portion 723a toward the free end of the first elastic portion 723a. It is also understood that the first elastic portion 723a is inclined and bent with respect to the substrate portion 722, and the first elastic portion 723a and the substrate portion 722 may form an approximately V-shaped bending structure.

When the electrode elastic piece 720 is inserted into the electrode slot 189 in the second direction from a slot end of the electrode slot 189 toward the slot bottom wall, the bent structure formed by the first elastic portion 723a and the substrate portion 722 during the process of inserting the electrode slug 720 into the electrode slot 189 may generate a reverse elastic preload force due to the compression effect of the first slot side wall and the second slot side wall, so that the first elastic portion 723a may abut against the first slot side wall and the substrate portion 722 may abut against the second slot side wall. Thus, not only the movement of the electrode elastic piece 720 within the electrode slot 189 is limited in both the third direction and the second direction, but also the electrode elastic piece 720 is prevented from accidentally dislodging from the electrode slot 189 due to dropping or collision of the main body of the wearable device.

In one embodiment, referring to FIG. 9, FIG. 13, and FIG. 14, a second limiting protrusion 190 protrudes out of the first slot side wall, which may abut against the free end of the first elastic portion 723 in the second direction. As previously described, by means of the cooperation between the first elastic portion 723a and the substrate portion 722, the electrode elastic piece 720 may be limited from moving or shaking within the electrode slot 189 in the third direction. By means of the second limiting protrusion 190, the electrode elastic piece 720 may be limited in the second direction, preventing the electrode elastic piece 720 from moving or swaying in the electrode slot 189 in the second direction. It should be noted that, in this embodiment, the first elastic portion 723a may be arranged in parallel and opposite to the substrate portion 722, and the first elastic portion 723a may be inclined and bent relative to the substrate portion 722.

In one embodiment, a sealant is provided between the first elastic portion 723a and the first slot side wall, or the sealant is provided between the first elastic portion 723a and the first elastic portion 723a and the slot bottom wall, or the sealant is provided between the first elastic portion 723a, the first slot side wall, and the slot bottom wall. With the sealant, the first elastic portion 723a may be securely fixed to the slot wall of the electrode slot 189, further enhancing the solidity and strength of the structural connection between the electrode elastic piece 720 and the second housing 120.

In some embodiments, referring to FIG. 13, a second glue reservoir 191 for accommodating the sealant may be provided on a position (e.g., a first slot side wall, a slot bottom wall) of the slot wall of the electrode slot 189 corresponding to the first elastic portion 723 to increase the usage amount of the sealant and to expand the area of the sealant contacting the first elastic portion 723 and the second housing 120 with the help of the second glue reservoir 191.

In one embodiment, referring to FIG. 9, FIG. 13, and FIG. 14, the plurality of elastic portions 723 further includes a second elastic portion 723b and a third elastic portion 723c. The fixed end of the second elastic portion 723b is in a bending engagement with an end of the substrate portion 722 in the first direction, and the fixed end of the third elastic portion 723c is in a bending engagement with an end of the substrate portion 722 away from the slot bottom wall in the second direction. Therefore, the electrode elastic piece 720 may be limited from moving or swaying within the electrode slot 189 from both the third direction and the first direction by utilizing the second elastic portion 723b and the third elastic portion 723c.

In one embodiment, referring to FIG. 9, FIG. 13, and FIG. 14, a third limiting protrusion 192 is provided on a position of the first slot side wall corresponding to the second elastic portion 723b, and a fourth limiting protrusion 193 is provided on a position of the first slot side wall corresponding to the third elastic portion 723c. The second elastic portion 723b and the third elastic portion 723c may be held in the third direction with the aid of the third limiting protrusion 192 and the fourth limiting protrusion 193.

As an example of the structural cooperation between the second elastic portion 723b and the third limiting protrusion 192, using the third limiting protrusion 192 to abut against the second elastic portion 723b causes the second elastic portion 723b to be deformed toward the substrate portion 722 along the third direction. This causes the second elastic portion 723b to generate an elastic preload force that counteracts the third limiting protrusion 192, thereby firmly abutting the second elastic portion 723b against the first slot side wall, effectively enhancing the structural fixing effect of the electrode elastic piece 720 and the second housing 120.

In some embodiments, according to the structural design requirements of the electrode slot 189 or the electrode elastic piece 720, a plurality of second elastic portions 723b or a plurality of third elastic portions 723c may be provided, and the plurality of second elastic portions 723b or the plurality of third elastic portions 723c are spaced apart at different positions of the substrate portion 722. Certainly, the second elastic portion 723b or the third elastic portion 723c may also be omitted.

In some embodiments, referring to FIG. 9, the first elastic portion 723a is located between the second elastic portion 723b and the third elastic portion 723c in the first direction, which facilitates stabilized fixation of the electrode elastic piece 720 within the electrode slot 189.

In one embodiment, referring to FIGs. 9 and 14, the electrode elastic piece 720 further includes a wiring portion 724 that may be connected to an end of the substrate portion 722 in the first direction (e.g., an end away from the second side wall), and the wiring portion 724 extends or protrudes out of the electrode slot 189.

With the aid of the wiring portion 724, a wire assembly may be welded and fixed to the electrode elastic piece 720, so that the battery assembly 700 establishes an electrical connection relationship with the control board assembly 200 via the wire assembly.

In one embodiment, referring to FIG. 9, the fixed end of the contact portion 721 is in a bent engagement with the end of the substrate portion 722 that is away from the slot bottom wall in the second direction to enable the contact portion 721 to be inclined relative to the substrate portion 722 toward a side of the second slot side wall back to the first slot side wall.

In other words, in the state in which the battery bracket 710 carrying the battery 730 is locked in the accommodating cavity 100a, the contact portion 721 is inclined relative to the substrate portion 722 toward a side on which the battery bracket 710 or the battery 730 is located, which may enable the contact portion 721 to make effective contact with the battery 730.

In some embodiments, in conjunction with FIG. 4, FIG. 9, and FIG. 14, for the convenience of distinction and description, one of the two electrode elastic pieces 720 is defined as a positive elastic piece 720a, and the other of the two electrode elastic pieces 720 is defined as a negative elastic piece 720b. Exemplarily, one of the two electrode elastic pieces 720 that is capable of elastically abutting against the positive electrode of the battery 730 with the open end of the battery compartment is defined as the positive elastic piece 720a, and one of the two electrode elastic pieces 720 that is capable of elastically abutting against the negative electrode of the battery 730 within the electrode window 718 is defined as the negative elastic piece 720b.

Referring to FIG. 4, an inclined angle of the contact portion 721 of the positive elastic piece 720a relative to the substrate portion 722 of the positive elastic piece 720a is a first angle, an inclined angle of the contact portion 721 of the negative elastic piece 720b relative to the substrate portion 722 of the negative elastic piece 720b is a second angle, and the first angle is less than the second angle. Exemplarily, the first angle may be within a range of 3°-8°, and the second angle may be within a range of 15°-25°, e.g., the first angle is 3°, and the second angle is 25°.

Due to different structural forms and dimensions of the positive end and the negative end of the battery 730, in some embodiments in which the fool-proof portion 717 is provided within the battery compartment, the contact portion 721 of the negative elastic piece 720b needs to extend into the battery compartment at a depth greater than the depth at which the contact portion 721 of the positive elastic piece 720a needs to extend into the battery compartment.

Thus, by differentially setting the inclined angles of the contact portion 721 of both the positive elastic piece 720a and the negative elastic piece 720b, it is possible to enable the contact portions of the positive elastic piece 720a and the negative elastic piece 720b to adapt to the mounting state of the battery 730 inside the battery compartment, so as to make effective contact with the battery 730.

Considering the overall dimension of the main body of the wearable device, the wall thickness of the battery bracket 710 (e.g., the thickness of the end wall portion 712), the depth of the electrode elastic piece 720 extending into the battery compartment, the elastic deformation of the electrode elastic piece 720, the pressure that the electrode elastic piece 720 can provide to the battery 730, the contact degree of the contact portion 721 with the battery 730, and many other factors, in one embodiment, the first angle is set to be 5°, and the second angle is set to 20°.

It should be noted that the two bold dotted lines intersecting each other in FIG. 4 only serve to show the approximate angular relationship between the contact portion 721 of the positive elastic piece 720a and the substrate portion 722, and the two bold solid lines intersecting each other in FIG. 4 only serve to show the approximate angular relationship between the contact portion 721 of the negative elastic piece 720b and the substrate portion 722.

The above specific examples applied to illustrate the present disclosure are only used to assist in understanding the present disclosure and are not intended to limit the present disclosure. For a person skilled in the art to which the present disclosure belongs, various simple deductions, deformations, or substitutions may also be made based on the ideas of the present disclosure.

## Claims

1. A wearable device, comprising:
a housing assembly, including an accommodating cavity and a battery window, wherein the battery window connects the accommodating cavity to an exterior of the housing assembly; and
a battery assembly, including a battery bracket configured to accommodate a battery,
wherein
a second pivot structure and a locking structure are formed between the battery bracket and an inner wall of the housing assembly;
the battery bracket is capable of rotating about the second pivot structure relative to the housing assembly to allow the battery bracket to enter and exit the accommodating cavity through the battery window; and
the locking structure is capable of locking the battery bracket within the accommodating cavity in a state in which the battery bracket closes the battery window.

2. The wearable device of claim 1, wherein the battery bracket has a peripheral wall portion and an end wall portion provided connected to each other;
the peripheral wall portion surrounds a geometric center of the end wall portion to form a battery compartment configured to accommodate the battery between the peripheral wall portion and the end wall portion; and
the second pivot structure and the locking structure are arranged outside the battery compartment.

3. The wearable device of claim 2, wherein the locking structure includes a locking protrusion and a locking slot, the locking protrusion protrudes out of the inner wall of the housing assembly, and the locking slot is provided on the peripheral wall portion or the end wall portion; and
the locking protrusion and the locking slot cooperate with each other to limit rotation of the battery bracket relative to the housing assembly.

4. The wearable device of claim 3, wherein the peripheral wall portion is provided with a third avoidance notch, the third avoidance notch extends from an end of the peripheral wall portion away from the end wall portion in a width direction of the battery window to the end wall portion; and
the locking slot is provided in the end wall portion and communicates with the third avoidance notch, wherein the width direction of the battery window is a direction of a rotation axis of the second pivot structure.

5. The wearable device of claim 4, wherein the third avoidance notch is provided in the accommodating cavity in the state in which the battery bracket closes the battery window.

6. The wearable device of claim 2, wherein the battery bracket also includes a limiting portion; the limiting portion protrudes out of an outer surface of the peripheral wall portion; and the limiting portion is configured to abut against the housing assembly within the battery window, to cooperate with the locking structure to limit the battery bracket within the accommodating cavity.

7. The wearable device of claim 2, wherein the battery bracket also includes an operating portion configured to receive an external force for prompting the battery bracket to rotate; and the operating portion protrudes out of an outer surface of the peripheral wall portion.

8. The wearable device of claim 2, wherein the battery bracket also includes a fool-proof portion; the fool-proof portion is provided within the battery compartment and protrudes out of a junction between the peripheral wall portion and the end wall portion; the fool-proof portion is configured to limit a mounting direction of the battery within the battery compartment; and/or
the battery compartment is provided with a fool-proof mark, the fool-proof mark is fixed to an inner surface of the end wall portion or an inner surface of the peripheral wall portion.

9. The wearable device of claim 2, wherein the battery bracket further includes an electrode window provided through the end wall portion; the electrode window extends from the geometric center of the end wall portion to a junction between the end wall portion and the peripheral wall portion along a rotational trajectory of the battery bracket; and the electrode window is configured to allow an electrode elastic piece to extend into the battery compartment to abut against the battery.

10. The wearable device of claim 9, wherein the peripheral wall portion is provided with a fourth avoidance notch through the peripheral wall portion, and the fourth avoidance notch is in communication with the electrode window.

11. The wearable device of claim 2, wherein one end of the peripheral wall portion in a direction of a rotation axis of the second pivot structure is connected to the end wall portion, to form an opening that communicates with the battery compartment on an end of the peripheral wall portion away from the end wall portion in the direction of the rotation axis of the second pivot structure; and the opening being used to hold an electrode elastic piece against a battery.

12. The wearable device of claim 2, wherein the second pivot structure includes a shaft sleeve portion and a shaft rod portion, the shaft sleeve portion protrudes out of an outer surface of the peripheral wall portion, and the shaft rod portion is provided through the housing assembly and the shaft sleeve portion.

13. The wearable device of claim 1, wherein the second pivot structure and the locking structure are provided on two opposite sides in a length direction of the battery window in the state in which the battery bracket closes the battery window, wherein the length direction of the battery window is a direction around the direction of the rotation axis of the second pivot structure.

14. The wearable device of any one of claims 1-13, wherein the battery assembly further includes the electrode elastic piece; and the electrode elastic piece is fixed within the accommodating cavity for elastically contacting the battery provided within the battery bracket.

15. The wearable device of claim 14, wherein an electrode slot is formed in the accommodating cavity, the electrode slot includes a first slot side wall and a second slot side wall, the first slot side wall and the second slot side wall are spaced apart from and opposite to each other in the direction of the rotation axis of the second pivot structure; and
the electrode elastic piece includes a substrate portion, an elastic portion, and a contact portion, the elastic portion and the contact portion are bent and connected to the substrate portion, respectively, and the elastic portion and the substrate portion are spaced apart from and opposite to each other in the direction of the rotation axis of the second pivot structure, wherein
the elastic portion abuts against the first slot side wall, and the substrate portion abuts against the second slot side wall; and the contact portion is capable of protruding out of the electrode slot for elastically contacting the battery.

16. The wearable device of claim 15, wherein the electrode elastic piece includes a plurality of elastic portions, and at least two elastic portions among the plurality of elastic portions are bent in different directions relative to the substrate portion, to limit and fix at least a portion of the electrode elastic piece within the electrode slot from different directions.

17. The wearable device of claim 16, wherein the electrode slot also includes a slot bottom wall, the slot bottom wall is connected between the first slot side wall and one end of the second slot side wall in a second direction; the plurality of the elastic portions include at least one first elastic portion, a free end of the first elastic portion abuts against the first slot side wall, and a fixed end of the first elastic portion is bent and connected to an end of the substrate portion close to the slot bottom wall in the second direction, wherein the second direction is a direction intersecting with the direction of the rotation axis of the second pivot structure.

18. The wearable device of claim 17, wherein a gap between the first elastic portion and the substrate portion is set to gradually increase from the fixed end of the first elastic portion toward the free end of the first elastic portion; and/or the first slot side wall is provided with a second limiting protrusion, and the second limiting protrusion is configured to abut against the free end of the first elastic portion from the second direction.

19. The wearable device of claim 17, wherein a sealant is provided between the first elastic portion and the first slot side wall and/or the slot bottom wall, the sealant is configured to fix the first elastic portion to the first slot side wall and/or the slot bottom wall.

20. The wearable device of claim 19, wherein a second glue reservoir is provided on the first slot side wall and/or a position of the slot bottom wall corresponding to the first elastic portion, and the second glue reservoir is configured to accommodate the sealant.

21. The wearable device of claim 17, wherein the plurality of the elastic portions also include at least one second elastic portion and/or at least one third elastic portion, a fixed end of the at least one second elastic portion is bent and connected to one end of the substrate portion in a first direction, and a fixed end of the at least one third elastic portion is bent and connected to an end of the substrate portion away from the slot bottom wall in the second direction, wherein any two of the first direction, the second direction, and the direction of the rotation axis of the second pivot structure intersect.

22. The wearable device of claim 21, wherein the first elastic portion is between the second elastic portion and the third elastic portion in the first direction.

23. The wearable device of claim 21, wherein a third limiting protrusion is provided on a position of the first slot side wall corresponding to the second elastic portion, and the third limiting protrusion is configured to abut against the second elastic portion from the direction of the rotation axis of the second pivot structure.

24. The wearable device of claim 21, wherein a fourth limiting protrusion is provided in a position of the first slot side wall corresponding to the third elastic portion, and the fourth limiting protrusion is configured to abut against the third elastic portion from the direction of the rotation axis of the second pivot structure.

25. The wearable device of claim 15, wherein the electrode elastic piece is also provided with a wiring portion; and the wiring portion is connected to the substrate portion and protrudes out of the electrode slot.

26. The wearable device of claim 15, wherein in the direction of the rotation axis of the second pivot structure, the second slot side wall is closer to the battery window as compared to the first slot side wall; and the contact portion is inclined relative to the substrate portion toward a side of the second slot side wall opposite to the first slot side wall and extends out of the electrode slot.

27. The wearable device of claim 26, wherein there are two electrode elastic pieces and two electrode slots, and the two electrode elastic pieces and the two electrode slots are in one-to-one correspondence, wherein
in the direction of the rotation axis of the second pivot structure, the two electrode slots are located on two opposite sides of the battery window, to enable contact portions of the two electrode elastic pieces to be in elastic contact with a positive terminal and a negative terminal of the battery, respectively.

28. The wearable device of claim 27, wherein one of the two electrode elastic pieces corresponding to the positive terminal of the battery is a positive electrode elastic piece, and another of the two electrode elastic pieces corresponding to the negative terminal of the battery is a negative electrode elastic piece;
an inclined angle of a contact portion of the positive electrode elastic piece relative to a substrate portion of the positive electrode elastic piece is a first angle, an inclined angle of a contact portion of the negative electrode elastic piece relative to a substrate portion of the negative electrode elastic piece is a second angle, and the first angle is smaller than the second angle.

29. The wearable device of claim 14, wherein the housing assembly includes a first housing and a second housing, the first housing is connected to the second housing to enclose the accommodating cavity, the battery window is provided through a side wall of the second housing away from the first housing, and the battery assembly is connected to an inner wall of the second housing.

30. The wearable device of claim 29, wherein one or more of the first housing, the second housing, and the battery bracket is a one-piece structure made of polyimide (PI).

31. The wearable device of any one of claims 1-30, further comprising an in-ear speaker, wherein the in-ear speaker includes a speaker assembly and a wearable assembly, and the wearable assembly is connected between the housing assembly and the speaker assembly; and
the housing assembly is capable of being worn between a dorsal side of an ear of a user and the head of the user, and the speaker assembly is capable of being inserted within an ear canal of the user.

32. The wearable device of any one of claims 1-31, wherein the wearable device is an air-conduction hearing aid.
